# EUROPEAN PATENT APPLICATION

(11) **EP 4 361 761 A1**
(43) Date of publication of application: **01.05.2024**
(21) Application number: 22878725.5
(22) Date of filing: 29.08.2022
(51) Int. Cl.: G06F 1/16, H04R 1/28

(54) **ELECTRONIC DEVICE COMPRISING SOUND MODULE**

(30) Priority: 06.10.2021 KR 20210132367
(71) Applicant: Samsung Electronics Co., Ltd., Suwon-si, Gyeonggi-do 16677 (KR)
(72) Inventor: LEE, Seunghak, Suwon-si Gyeonggi-do 16677 (KR); LEE, Wonsun, Suwon-si Gyeonggi-do 16677 (KR); JUNG, Nurimaka, Suwon-si Gyeonggi-do 16677 (KR); JU, Wanjae, Suwon-si Gyeonggi-do 16677 (KR)
(74) Representative: Gulde & Partner
(86) International application number: PCT/KR2022/012845
(87) International publication number: WO 2023/058904

(57) **Abstract**

An electronic device according to one embodiment comprises: a printed circuit board having a loading part opened from a front surface to a rear surface, which is opposite to the front surface; a sound module arranged on the loading part so as to generate sound; and a first shield can for sealing, on the rear surface of the printed circuit board, an area including the loading part, wherein the first shield can and the printed circuit board can form a resonance space in which sound generated from the rear surface of the sound module causes resonance.

## Description

### Technical Field

Various embodiments in the present disclosure relate to an electronic device including a sound module.

### Background Art

An electronic device may include a sound module and the sound module may be an electronic device provided with a sound output function that generates and copies soundwaves by the vibration of a speaker unit including a diaphragm.

The description provided above shall not be construed such that the applicant acknowledges this as a prior art of the description provided in the present disclosure and shall be construed only as a related art of the present disclosure.

### Disclosure of the Invention

### Technical Goals

Recently, in various electronic devices including a sound module, a resonant space or a duct may be formed in a rear space of the sound module to improve the sound quality and compensate for the acoustic flatness in a low-frequency area of a sound output by the sound module for outputting a sound. However, the resonant space may require a condition for a sound to resonate as the resonant space is substantially shielded from the outside, and to secure the resonant space, separate space expansion may be required.

However, recently, due to the development of technology, since there is a technical demand for decreasing the size or weight of an electronic device to improve portability and convenience for a user, an effort may be made to efficiently design an internal space while securing the resonant space. A housing of an electronic device including a separate resonant space may shake and the volume of the housing may increase.

In one embodiment, a resonant space that is substantially shielded may be formed by a shield can and a printed circuit board (PCB), and a sound module may be disposed therein.

In one embodiment, a resonant space may include a sealing member to prevent a sound from leaking to the outside and may include a compression member that decreases the vibration of the resonant space.

The technical goals to be achieved through example embodiments of the present disclosure are not limited to those described above, and other technical goals not mentioned above are clearly understood by one of ordinary skill in the art from the following description.

### Technical Solutions

An electronic device according to various embodiments includes a PCB in which a seating portion that is open from a front surface to a rear surface, which is opposite to the front surface, is formed, a sound module disposed on the seating portion and configured to generate a sound, and a first shield can shielding an area including the seating portion in a rear surface of the PCB, wherein the first shield can and the PCB form a resonant space in which a sound generated to a rear surface of the sound module causes resonance.

An electronic device according to another embodiment of the present disclosure includes a housing including a front plate, a rear plate, and a frame in which an acoustic duct disposed between the front plate and the rear plate and configured to receive and guide a sound is formed, a sound module disposed in the housing, supported by the frame, and configured to output a sound to the acoustic duct, a PCB which is coupled to the frame and in which a seating portion that is open to enclose a side surface of the sound module is formed, and a first shield can coupled to the PCB to shield an area including the seating portion in a rear surface of the PCB, wherein the first shield can and the PCB form a resonant space in which a sound generated to a rear surface of the sound module causes resonance.

### Brief Description of Drawings

FIG. 1 is a block diagram of an electronic device in a network environment according to one embodiment.
FIG. 2 is a block diagram of an audio module according to one embodiment.
FIG. 3A is a front perspective view of an electronic device according to one embodiment.
FIG. 3B is a rear perspective view of the electronic device according to one embodiment.
FIG. 4 is an exploded perspective view of an electronic device according to one embodiment.
FIG. 5 is an exploded perspective view of a sound module according to one embodiment.
FIG. 6A is a rear plan view of an electronic device according to one embodiment.
FIG. 6B is a cross-sectional view of the electronic device according to one embodiment.
FIG. 7 is a cross-sectional view of an electronic device according to one embodiment.
FIG. 8 is a cross-sectional view of an electronic device according to one embodiment.
FIG. 9 is a cross-sectional view of an electronic device according to one embodiment.
FIG. 10 is a profile illustrating a sound intensity with respect to a frequency of a sound of an electronic device according to one embodiment.
FIG. 11A is a cross-sectional view of an electronic device according to one embodiment.
FIG. 11B is a cross-sectional view of the electronic device according to one embodiment.
FIG. 12Ais a view of a partition wall of an electronic device according to one embodiment.
FIG. 12B is a view of a partition wall of the electronic device according to one embodiment.
FIG. 12C is a view of a partition wall of the electronic device according to one embodiment.
FIG. 13 is a cross-sectional view of an electronic device according to one embodiment.
FIG. 14 is a profile illustrating a sound intensity with respect to a frequency of a sound of an electronic device according to one embodiment.

### Best Mode for Carrying Out the Invention

Hereinafter, the embodiments will be described in detail with reference to the accompanying drawings. When describing the embodiments with reference to the accompanying drawings, like reference numerals refer to like elements and a repeated description related thereto will be omitted.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to one embodiment, the module may be implemented in a form of an application-specific integrated circuit (ASIC).

Embodiments of the present disclosure as set forth herein may be implemented as software (e.g., the program 120) including one or more instructions that are stored in a storage medium (e.g., an internal memory 136 or an external memory 138) that is readable by a machine (e.g., an electronic device). For example, a processor of the machine (e.g., an electronic device) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to one embodiment, a method according to one embodiment of the disclosure may be included and provided in a computer program product. The computer program product may be traded as a product between a seller and a buyer. The computer program product may be distributed in the form of a machine-readable storage medium (e.g., a compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, according to various example embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

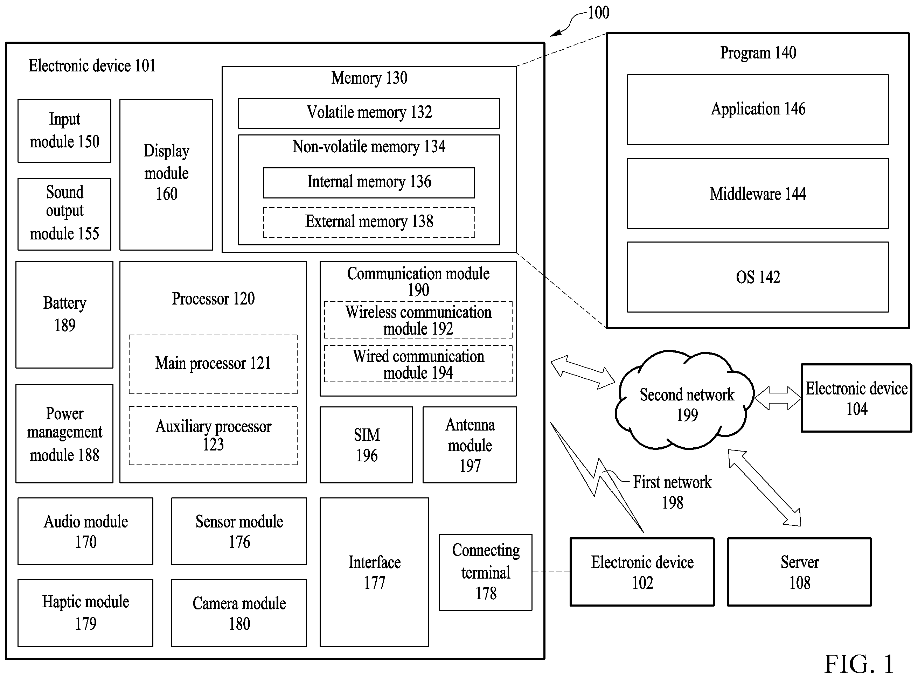

FIG. 1 is a block diagram illustrating an electronic device 101 in a network environment 100 according to various example embodiments. Referring to FIG. 1, an electronic device 101 in a network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to one embodiment, the electronic device 101 may communicate with the electronic device 104 via the server 108. According to one embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to one embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to one embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to one embodiment, the auxiliary processor 123 (e.g., an ISP or a CP) may be implemented as a portion of another component (e.g., the camera module 180 or the communication module 190) that is functionally related to the auxiliary processor 123. According to one embodiment, the auxiliary processor 123 (e.g., an NPU) may include a hardware structure specified for artificial intelligence (AI) model processing. An AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to one embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control a corresponding one of the display, the hologram device, and the projector. According to one embodiment, the display module 160 may include a touch sensor adapted to sense a touch, or a pressure sensor adapted to measure an intensity of a force incurred by the touch.

The audio module 170 may convert a sound into an electric signal or vice versa. According to one embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state. According to one embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to one embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an example embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or an electrical stimulus which may be recognized by a user via his or her tactile sensation or kinesthetic sensation. According to one embodiment, the haptic module 179 may include, for example, a motor, a piezoelectric element, or an electric stimulator.

The camera module 180 may capture a still image and moving images. According to one embodiment, the camera module 180 may include one or more lenses, image sensors, ISPs, or flashes.

The power management module 188 may manage power supplied to the electronic device 101. According to one embodiment, the power management module 188 may be implemented as, for example, at least a part of a power management integrated circuit (PMIC).

The battery 189 may supply power to at least one component of the electronic device 101. According to one embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to one embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to one embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to one embodiment, the antenna module 197 may include an antenna including a radiating element including a conductive material or a conductive pattern formed in or on a substrate (e.g., a printed circuit board (PCB)). According to one embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to one embodiment, another component (e.g., a radio frequency integrated circuit (RFIC)) other than the radiating element may be additionally formed as a part of the antenna module 197.

According to one embodiment, the antenna module 197 may form a mmWave antenna module. According to one embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to one embodiment, commands or data may be transmitted or received between the electronic device 101 and the external electronic device 104 via the server 108 coupled with the second network 199. Each of the external electronic devices 102 or 104 may be a device of the same type as or a different type from the electronic device 101. According to one embodiment, all or some of operations to be executed by the electronic device 101 may be executed at one or more of the external electronic devices 102, 104, and 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or mobile edge computing. In one embodiment, the external electronic device 104 may include an Internet-of-things (IoT) device. The server 108 may be an intelligent server using machine learning and/or a neural network. According to one embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

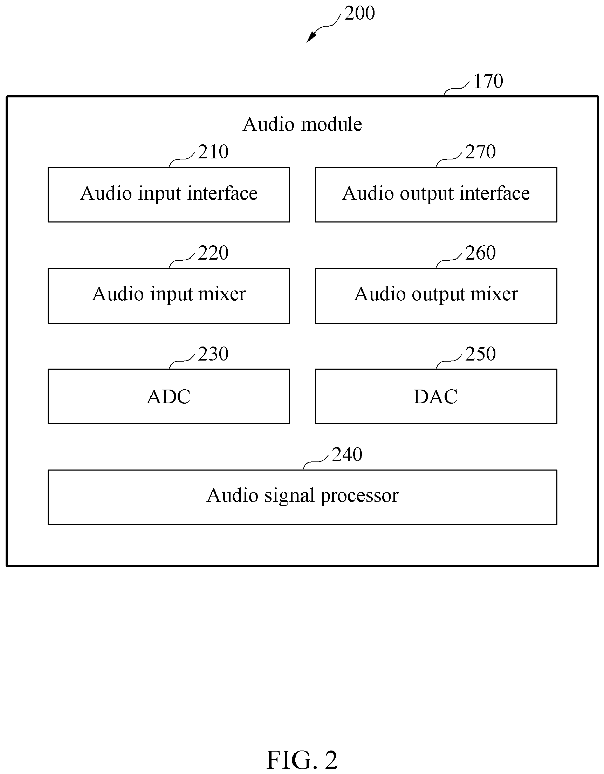

FIG. 2 is a block diagram 200 of the audio module 170 according to one embodiment. Referring to FIG. 2, the audio module 170 may include an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., Bluetooth^{™} communication) via the wireless communication module 192 to receive the audio signal. According to one embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to one embodiment, additionally or alternatively, the audio input interface 210 may receive an audio signal from another component (e.g., the processor 120 or the memory 130 of FIG. 1) of the electronic device 101.

The audio input mixer 220 may synthesize a plurality of input audio signals into at least one audio signal. For example, according to one embodiment, the audio input mixer 220 may synthesize a plurality of analog audio signals input via the audio input interface 210 into at least one analog audio signal.

The ADC 230 may convert an analog audio signal into a digital audio signal. For example, according to one embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to one embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to one embodiment, one or more functions of the audio signal processor 240 may be implemented in the form of an equalizer.

The DAC 250 may convert a digital audio signal into an analog audio signal. For example, according to one embodiment, the DAC 250 may convert a digital audio signal processed by the audio signal processor 240 or a digital audio signal obtained from another component (e.g., the processor 120 or the memory 130) of the electronic device 101 into an analog audio signal.

The audio output mixer 260 may synthesize a plurality of audio signals, which are to be output, into at least one audio signal. For example, according to one embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to one embodiment, the sound output module 155 may include a plurality of speakers. In such a case, the audio output interface 270 may output audio signals having a plurality of different channels (e.g., stereo channels or 5.1 channels) via at least some of the plurality of speakers. According to one embodiment, the audio output interface 270 may be connected to the external electronic device 102 (e.g., an external speaker or a headset) directly via the connecting terminal 178 or wirelessly via the wireless communication module 192 to output an audio signal.

According to one embodiment, the audio module 170 may generate, without separately including the audio input mixer 220 or the audio output mixer 260, at least one digital audio signal by synthesizing a plurality of digital audio signals using at least one function of the audio signal processor 240.

According to one embodiment, the audio module 170 may include an audio amplifier (not shown) (e.g., a speaker amplifying circuit) that is capable of amplifying an analog audio signal input via the audio input interface 210 or an audio signal that is to be output via the audio output interface 270. According to one embodiment, the audio amplifier may be configured as a module separate from the audio module 170.

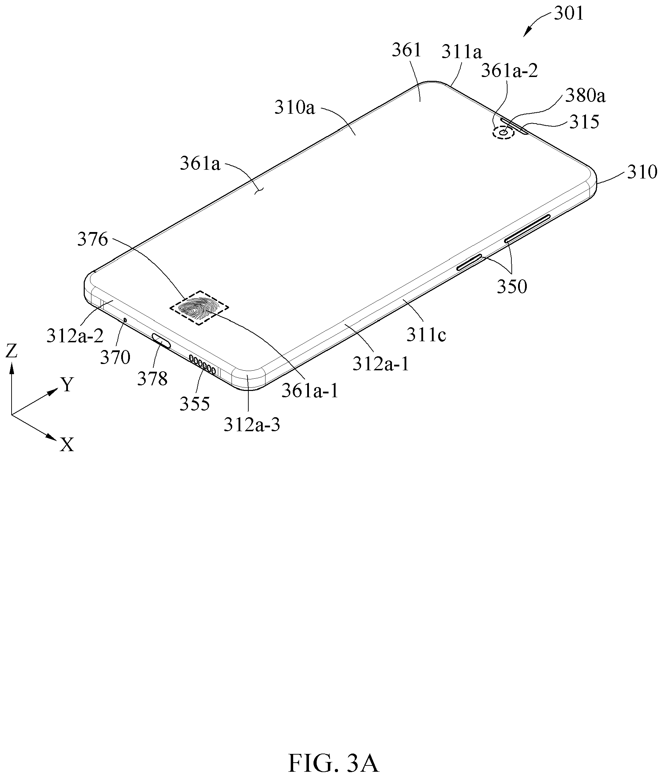

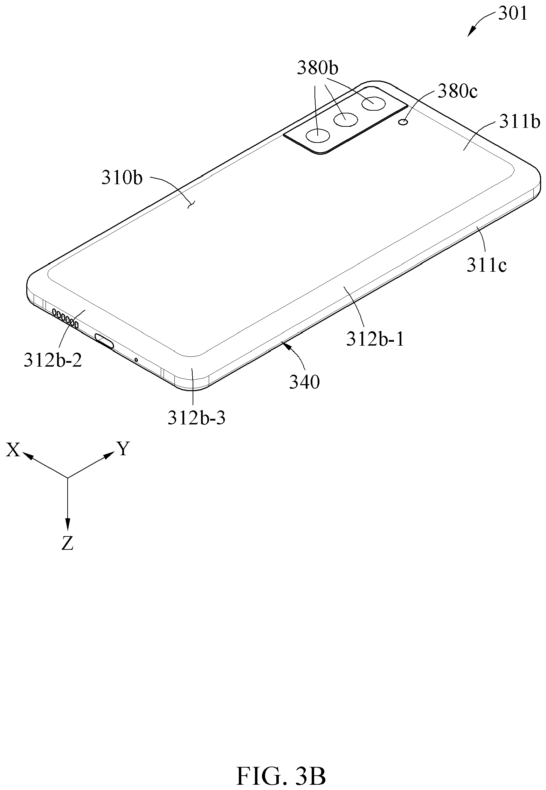

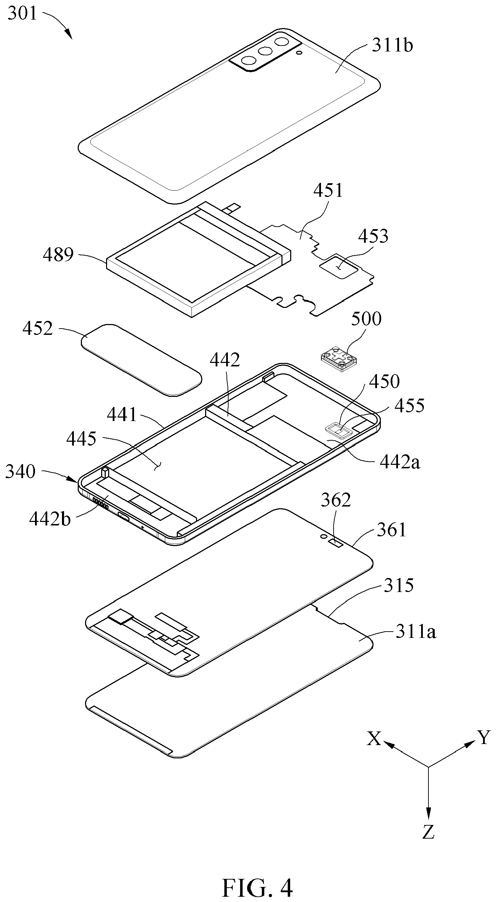

FIG. 3A is a front perspective view of an electronic device according to one embodiment, FIG. 3B is a rear perspective view of the electronic device according to one embodiment, and FIG. 4 is an exploded perspective view of an electronic device according to one embodiment.

Referring to FIGS. 3A, 3B, and 4, an electronic device 301 (e.g., the electronic device 101 of FIG. 1) in one embodiment may include a housing 310 including a front surface 310a (e.g., a first surface), a rear surface 310b (e.g., a second surface), and a side surface 311c (e.g., a third surface) surrounding an internal space between the front surface 310a and the rear surface 310b.

In one embodiment, the front surface 310a may be formed of a first plate 311a of which at least a portion is substantially transparent. For example, the first plate 311a may include a polymer plate or a glass plate including at least one coating layer. In one embodiment, the rear surface 310b may be formed of a rear plate 311b that is substantially opaque. For example, the second plate 311b may be formed of coated or tinted glass, ceramic, polymer, metal (e.g., aluminum, stainless steel, or magnesium), or a combination thereof. The side surface 311c may be formed by a frame 340 that is coupled to the first plate 311a and the second plate 311b and includes metal and/or polymer. In one embodiment, the second plate 311b and the frame 340 may be integrally and seamlessly formed. In one embodiment, the second plate 311b and the frame 340 may be formed of substantially the same material (e.g., aluminum).

In one embodiment, the first plate 311a may include a plurality of first edge areas 312a-1 that are rounded in a direction from at least one area of the front surface 310a toward the second plate 311b and extend in one direction (e.g., a + or -X-axis direction), a plurality of second edge areas 312a-2 that are rounded in the direction from at least one area of the front surface 310a toward the second plate 311b and extend in the other direction (e.g., a + or -Y-axis direction), and a plurality of third edge areas 312a-3 that are rounded in the direction from at least one area of the front surface 310a toward the second plate 311b and positioned between the plurality of first edge areas 312a-1 and the plurality of edge periphery areas 312a-2.

In one embodiment, the second plate 311b may include a plurality of fourth edge areas 312b-1 that are rounded in a direction from at least one area of the rear surface 310b toward the first plate 311a and extend in one direction (e.g., the + or -X-axis direction), a plurality of fifth edge areas 312b-2 that are rounded in the direction from at least one area of the rear surface 310b toward the first plate 311a and extend in the other direction (e.g., the + or -Y-axis direction), and a plurality of sixth edge areas 312b-3 that are rounded in the direction from at least one area of the rear surface 310b toward the first plate 311a and positioned between the plurality of fourth edge areas 312b-1 and the plurality of fifth edge areas 312b-2.

In one embodiment, the frame 340 may surround at least a portion of the internal space between the front surface 310a and the rear surface 310b. The frame 340 may include a first support structure 441 disposed on at least a portion of the side surface 311c and a second support structure 442 connected to the first support structure 441 to form a space for disposing the components of the electronic device 301.

In one embodiment, the first support structure 441 may connect the periphery of the first plate 311a and the periphery of the second plate 311b and surround the space between the first plate 311a and the second plate 311b, thereby forming the side surface 311c of the housing 310.

In one embodiment, the second support structure 442 may be disposed inside (or in a body portion) of the electronic device 301. The second support structure 442 may be integrally formed with the first support structure 441 or may be formed separately from the first support structure 441 and connected to the first support structure 441. In one embodiment, PCBs 451 and 452 may be disposed in the second support structure 442. The second support structure 442 may be, for example, connected to a ground of the PCB 451 or 452.

In one embodiment, a display 361 may be disposed on a surface (e.g., a bottom surface (a surface in the +Z-axis direction) of FIG. 4) of the second support structure 442 and the second plate 311b may be disposed on the other surface (e.g., a top surface (a surface in the -Z-axis direction) of FIG. 4) of the second support structure 442.

In one embodiment, at least a portion of the frame 340 may be formed of a conductive material. For example, the first support structure 441 may be formed of a metal and/or conductive polymer material. In one embodiment, the second support structure 442 may be formed of a metal and/or conductive polymer material, like the first support structure 441.

In one embodiment, the frame 340 may include a support area 450 for accommodating or supporting a sound module 500. Alternatively, the support area 450 may accommodate the sound module 500 and may support the first circuit board 451. An acoustic duct 455, through which a sound is output from the sound module 500 and is emitted, may be formed in the support area 450.

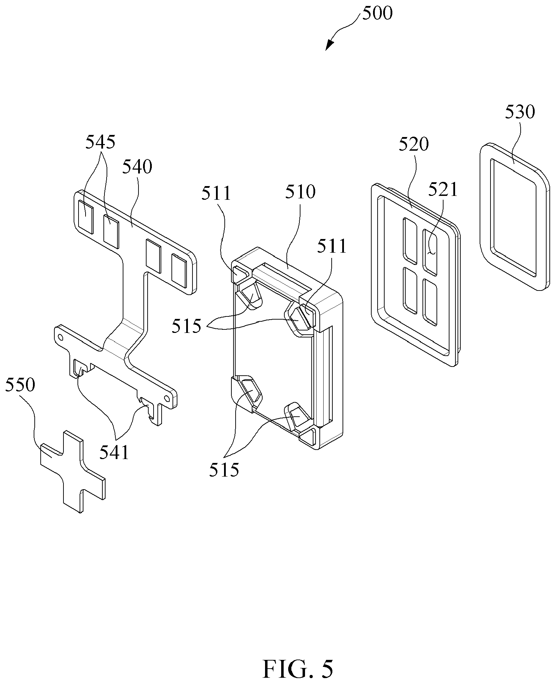

Structures and roles of the sound module 500 and the support area 450 are described below FIG. 5.

In one embodiment, the electronic device 301 may include the display 361 (e.g., the display module 160 of FIG. 1). In one embodiment, the display 361 may be disposed on the front surface 310a. In one embodiment, the display 361 may be exposed through at least a portion (e.g., the plurality of first edge areas 312a-1, the plurality of second edge areas 312a-2, and the plurality of third edge areas 312a-3) of the first plate 311a.

In one embodiment, an edge of the display 361 may substantially coincide with an outer edge of the first plate 311a. In one embodiment, the display 361 may include a touch sensing circuit, a pressure sensor for sensing an intensity (pressure) of a touch, and/or a digitizer for detecting a magnetic-type stylus pen.

In one embodiment, the display 361 may include a screen display area 361a that is visually exposed and displays content through a pixel or a plurality of cells. In one embodiment, the screen display area 361a may include a sensing area 361a-1 and/or a camera area 361a-2. In this case, the sensing area 361a-1 may overlap with at least one area of the screen display area 361a. The sensing area 361a-1 may allow transmission of an input signal related to a sensor module 376 (e.g., the sensor module 176 of FIG. 1). The sensing area 361a-1 may display content, like the screen display area 361a that does not overlap the sensing area 361a-1. For example, the sensing area 361a-1 may display the content while the sensor module 376 is not operating. The camera area 361a-2 may overlap at least one area of the screen display area 361a. The camera area 361a-2 may allow transmission of an optical signal related to first camera modules 380a and 380b (e.g., the camera module 180 of FIG. 1). The camera area 361a-2 may display content, like the screen display area 361a that does not overlap the camera area 361a-2. For example, the camera area 361a-2 may display content while the first camera module 380a or 380b does not operate.

In one embodiment, the electronic device 301 may include an audio module 370 (e.g., the audio module 170 of FIG. 1). The audio module 370 may obtain a sound from the outside of the electronic device 301. For example, the audio module 370 may be positioned on the side surface 311c of the housing 310. In one embodiment, the audio module 370 may obtain a sound through at least one hole.

In one embodiment, the electronic device 301 may include the sensor module 376. The sensor module 376 may sense a signal applied to the electronic device 301. The sensor module 376 may be positioned, for example, on the front surface 310a of the electronic device 301. The sensor module 376 may form the sensing area 361a-1 in at least a portion of the screen display area 361a. The sensor module 376 may receive an input signal transmitted through the sensing area 361a-1 and generate an electrical signal based on the received input signal. For example, the input signal may have a designated physical quantity (e.g., heat, light, temperature, sound, pressure, or ultrasound). As another example, the input signal may include a signal related to biometric information (e.g., a fingerprint, a voice, and the like) of a user.

In one embodiment, the electronic device 301 may include the camera modules 380a and 380b (e.g., the camera module 180 of FIG. 1). In one embodiment, the camera modules 380a and 380b may include a first camera module 380a, a second camera module 380b, and a flash 380c. In one embodiment, the first camera module 380a may be disposed to be exposed through the front surface 310a of the housing 310, and the second camera module 380b and the flash 380c may be disposed to be exposed through the rear surface 310b of the housing 310. In one embodiment, at least a portion of the first camera module 380a may be disposed in the housing 310 so as to be covered through the display 361. In one embodiment, the first camera module 380a may receive an optical signal transmitted through the camera area 361a-2. In one embodiment, the second camera module 380b may include a plurality of cameras (e.g., dual cameras, triple cameras, or quad cameras). In one embodiment, the flash 380c may include a light-emitting diode or a xenon lamp.

In one embodiment, the electronic device 301 may include external sound holes 315 and 355. The external sound holes 315 and 355 may output a sound to the outside of the electronic device 301, and the electronic device 301 may include the plurality of external sound holes 315 and 355.

For example, the first external sound hole 315 may be formed adjacent to the side surface 311c in one direction (e.g., the +Y direction) of the housing 310 and, specifically, to the front camera module 380a or the camera area 361a-2 of the display 361. The second external sound hole 355 may be at least one hole formed on the side surface 311c in one direction (e.g., the -Y direction) of the housing 310. The electronic device 301 may output a stereophonic sound to the outside of the electronic device 301 through the first external sound hole 315 and the second external sound hole 355.

In one embodiment, an engraved area of the first external sound hole 315 may be provided on the outer edge of the first plate 311a and as the first plate 311a is coupled to the display 361, the engraved area may be implemented as the first external sound hole 315. The display 361 may be provided with a sound hole 362 for a sound to pass therethrough, and may guide a sound in a direction of the first external sound output hole 315 from the sound module 500.

According to one embodiment, the electronic device 301 may not include the first external sound hole 315 and may directly output a sound to the outside through the sound hole 362. The display 361 in one embodiment may include a notch structure in which the sound hole 362 and the camera module 380a are disposed.

In one embodiment, the electronic device 301 may include an input module 350 (e.g., the input module 150 of FIG. 1). The input module 350 may receive a manipulation signal of a user. The input module 350 may include, for example, at least one key input device disposed to be exposed on the side surface 311c of the housing 310.

In one embodiment, the electronic device 301 may include a connecting terminal 378 (e.g., the connecting terminal 178 of FIG. 1). In one embodiment, the connecting terminal 378 may be disposed on the side surface 311c. For example, when the electronic device 301 is viewed in one direction (e.g., the +Y-axis direction of FIG. 3A), the connecting terminal may be disposed on a central portion of the side surface 311c and a sound output module 355 may be disposed in a direction (e.g., a right direction) based on the connecting terminal 378.

In one embodiment, the electronic device 301 may include the PCBs 451 and 452, and a battery 489 (e.g., the battery 189 of FIG. 1). In one embodiment, the PCBs 451 and 452 may include the first circuit board 451 and the second circuit board 452. In this case, the first circuit board 451 may be accommodated in a first board slot 442a of the second support structure 442 and the second circuit board 452 may be accommodated in a second board slot 442b of the second support structure 442. In an embodiment, the battery 489 may be accommodated in a battery slot 445 of the second support structure 442 formed between the first board slot 442a and the second board slot 442b.

In one embodiment, in the PCB 451 or 452, for example, in the first circuit board 451, a seating portion 453 that is open from the front surface (e.g., the +Z direction) to the rear surface (e.g., the -Z direction) that is opposite to the front surface may be formed. The seating portion 453 may be the same as or greater than a cross-sectional area in a plane direction (e.g., the X-Y plane) of the sound module 500 and may have a shape corresponding to a shape of a cross-section in the plane direction (e.g., the X-Y plane) of the sound module 500. The sound module 500 may be accommodated in the seating portion 453 and the sound module 500 and the first circuit board 451 may be disposed on a plane (e.g., the X-Y plane) at substantially the same height.

In one embodiment, a processor (e.g., the processor 120 of FIG. 1) may be disposed on the PCB 451 or 452. The processor may include, for example, one or more of a central processing unit (CPU), an application processor (AP), an image signal processor, a sensor hub processor, or a communication processor. In one embodiment, a wireless communication circuit (e.g., the wireless communication module 192 of FIG. 1) may be disposed on the PCB 451 or 452. The wireless communication circuit may perform communication with, for example, an external device (e.g., the electronic device 104 of FIG. 1). The electronic device 301 may include an antenna structure (e.g., the antenna module 197 of FIG. 1 and an antenna structure 50 of FIG. 5), and the wireless communication circuit may be electrically connected to the antenna structure. In one embodiment, the wireless communication circuit may generate a signal to be transmitted through the antenna structure or may detect a signal received through the antenna structure. In one embodiment, the PCB 451 or 452 may include a ground and the ground of the PCB 451 or 452 may function as a ground of an antenna structure implemented using the wireless communication circuit.

Hereinafter, the PCB 451 is described based on the first PCB 451 to describe the PCBs 451 and 452, and the actual implementation is not limited thereto and various PCBs may apply.

FIG. 5 is an exploded perspective view of a sound module 500 according to one embodiment.

Referring to FIG. 5, the sound module 500 in one embodiment may include a speaker unit 510, a grille 520, a sealing member 530, a terminal board 540, and a compression member 550.

In one embodiment, the sound module 500 may be the sound module 170 of FIGS. 1 to 2. Hereinafter, a general description of the sound module 500 including the speaker unit 510 is omitted and the sound module 500 that is applicable to the present disclosure is described. However, an actual implementation is not limited thereto and various sound modules 500 that may be modified by those skilled in the art may replace and may be implemented.

In one embodiment, the speaker unit 510 may be a device for outputting a sound and may be driven by an audio module (e.g., the audio module 170 of FIG. 2). The speaker unit 510 may include a diaphragm, a voice coil, a permanent magnet, and a main body. The main body may be fixed and supported by the seating portion 453 or the frame 340, and the diaphragm may be fixed to the main body. The diaphragm may generate a sound based on an electrical signal as the diaphragm vibrates due to the voice coil and the permanent magnet. A main body of the speaker unit 510 may be formed in an approximately square shape and may be installed such that the diaphragm in the center is able to vibrate.

In one embodiment, the speaker unit 510 may emit a sound as the diaphragm is disposed in a direction of the front surface (e.g., in a direction facing the grille 520 of FIG. 5), and in the speaker unit 510, a first terminal 511 and a plurality of vents 515 may be disposed in a direction of the rear surface (e.g., a direction facing the terminal board 540 of FIG. 5). The first terminal 511 may be provided with power or an electrical signal from the outside.

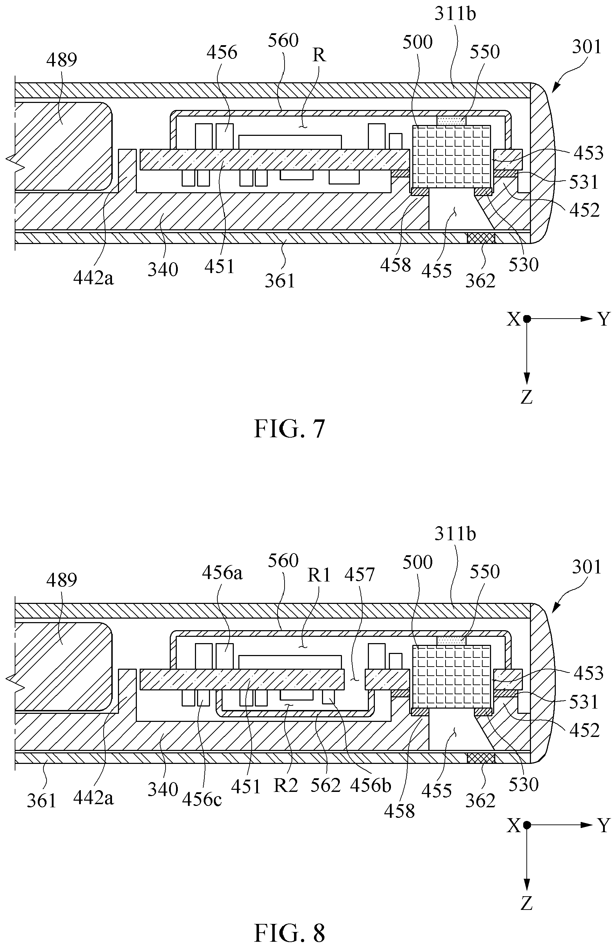

In one embodiment, the plurality of vents 515 may be an opening transmitting a sound of the speaker unit 510 to the rear surface, and specifically, may provide a sound of the speaker unit 510, for example, a sound in a low-range frequency, to a resonant space (e.g., a resonant space R of FIG. 7) formed in a rear direction, thereby may improve low-range sound performance by inducing resonance in a closed area.

In one embodiment, the grille 520 may be coupled to the front surface of the speaker unit 510 and the terminal board 540 may be coupled to an opposite surface of the rear surface. The grille 520 may guide, in a preset direction, sound radiating from the speaker unit 510 in a direction of the diaphragm through an opening 521 and may protect the diaphragm.

In one embodiment, the terminal board 540 may include a second terminal 541 coupled to the first terminal 511 of the speaker unit 510 and a third terminal 545 electrically connected to a PCB (e.g., the PCB 451 of FIG. 4). The terminal board 540 may be implemented as a flexible PCB (FPCB) and may transmit power and an electrical signal from the PCB 451 to the speaker unit 510. The speaker unit 510 may cause vibration of a diaphragm based on an electrical signal of a terminal unit and may generate a sound.

In one embodiment, the sealing member 530 may be coupled to the front surface of the grille 520 or the speaker unit 510, and the compression member 550 may be coupled to the rear surface of the speaker unit 510. The sealing member 530 and the compression member 550 may be formed of an elastic material, such as polyurethane, silicone, and rubber, or a soundproof material.

In one embodiment, when the sound module 500 is placed on another component, the sealing member 530 may be a member for preventing sound from being leaked through a coupling portion of the speaker unit 510. In one embodiment, when the speaker unit 510 is coupled to another component, the compression member 550 may be a member for a cushioning effect by absorbing the vibration of the speaker unit 510. However, the roles of the sealing member 530 and the compression member 550 are not limited thereto. The sealing member 530 and the compression member 550 may mutually have the same or similar functions and may be formed of the same or similar material. Hereinafter, the sealing member 530 and the compression member 550 are separately described based on their roles but may be implemented as members in the same material or role in an actual implementation.

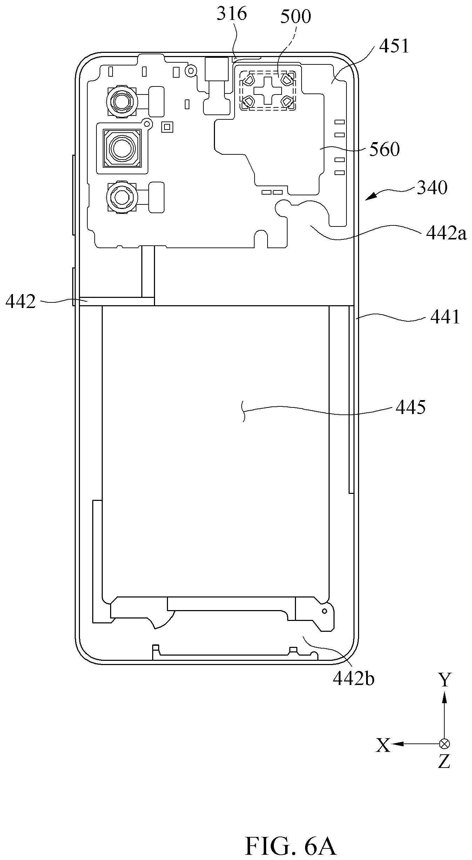

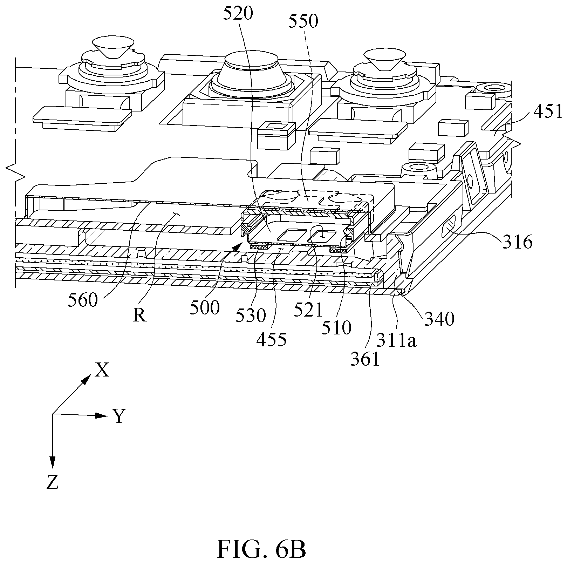

FIG. 6A is a rear plan view of the electronic device 301 according to one embodiment, and FIG. 6B is a cross-sectional view of the electronic device 301 according to one embodiment.

Referring to FIGS. 6A and 6B, the electronic device 301 may include a shield can 560, and the shield can 560 and the PCB 451 may form a resonant space R.

In one embodiment, the frame 340 may include acoustic ducts 316 and 455 that guide a generated sound to be emitted to the outside from the front surface of the sound module 500. As shown in FIGS. 6A and 6B, the electronic device 301 may emit a sound to the outside of the electronic device 301 through the acoustic duct 316 formed on the frame 340. Alternatively, as shown in FIGS. 4 and 7, the electronic device 301 may emit a sound to the outside of the electronic device 301 through the acoustic duct 455 formed on the frame 340.

In one embodiment, as shown in FIGS. 4 and 7, the electronic device 301 may emit a sound passing through the acoustic duct 455 to the outside of the electronic device 301 through a sound hole (e.g., the sound hole 362 of FIG. 4) formed in the display 361. In one embodiment, the sound passing through the acoustic duct 316 or 455 or the sound hole 362 may be emitted to the outside of the electronic device 301 through an external sound output hole (e.g., the first external sound output hole 315 of FIG. 4). In one embodiment, when a sound of the sound module 500 is directly emitted through the acoustic duct 316 without passing through the display 361, the display 361 may omit a notch area and may improve image display performance by outputting an image to the front surface of the display 361 including a top direction (e.g., the +Y direction).

In one embodiment, the sound module 500 may be disposed inside a seating portion (e.g., the seating portion 453 of FIG. 4) provided in the PCB 451. The seating portion 453 may be open from the front surface (e.g., the -Z direction) of the PCB 451 to the rear surface (e.g., the +Z direction) and may accommodate the sound module 500, and the PCB 451 may be accommodated in the first board slot 442a of the frame 340 such that the front surface of the PCB 451 may face the first board slot 442a. The speaker unit 510 of the sound module 500 may emit a sound to the opening 521 of the grille 520 formed on the front surface (e.g., the -Z direction of FIG. 6B), and the sound emitted to the opening 521 may pass the acoustic duct 455 of the frame 340 and may be guided to the outside, and the sound may be emitted to the outside of the electronic device 301.

In one embodiment, the shield can 560 may be coupled to the PCB 451 to seal an area including the seating portion 453 on which the sound module 500 is placed in the rear surface of the PCB 451. The shield can 560 may shield at least a component implemented in the PCB 451 from the outside and may shield electromagnetic or noise. In one embodiment, the compression member 550 may be provided between the sound module 500 and the shield can 560, and the compression member 550 may support the speaker unit 510 and the shield can 560 and may absorb the vibration of the speaker unit 510.

In one embodiment, the shield can 560 may shield the PCB 451 by including the seating portion 453 on which the sound module 500 is placed and a shielded area formed by the shield can 560 and the PCB 451 may form a resonant space R where a sound generated to the rear surface of the sound module 500 may cause resonance.

In one embodiment, the resonant space R of the rear surface (e.g., the +Z direction) of the PCB 451 may be open toward the front surface (e.g., the -Z direction) of the PCB 451, and in this case, the electronic device 301 may secure the resonant space R in the direction of the front surface. However, the actual implementation is not limited thereto and a detailed shielding structure is described with reference to FIG. 7 below.

In one embodiment, the electronic device 301 may secure the resonant space R with the PCB 451 and the shield can 560 and as the resonant space R is secured, the low-band performance of the sound module 500 may be improved. In addition, since the electronic device 301 according to one embodiment of the present disclosure does not require a separate space design for the resonant space R on the rear surface of the sound module 500 and is able to secure the resonant space R that is relatively wide using the PCB 451 and the shield can 560, the spatial efficiency may be improved while improving the sound output performance, and the space 445 for accommodating a battery (e.g., the battery 489 of FIG. 4) or a space for another component may be secured in the internal design of the electronic device 301.

FIG. 7 is a cross-sectional view of the electronic device 301 according to one embodiment.

Specifically, FIG. 4 is a cross-sectional view of the electronic device 301 in one embodiment in a Y-Z plane direction, and referring to FIG. 7, the electronic device 301 in one embodiment may include the shield can 560, the first sealing member 530, and the second sealing member 531, and may form the resonant space R.

In one embodiment, the frame 340 and the display 361 may be disposed in the direction of the front surface (e.g., the -Z direction) of the sound module 500, the shield can 560 and the second plate 311b (or the rear plate) may be disposed in the direction of the rear surface (e.g., the +Z direction) of the sound module 500, and internal components of the electronic device 301, such as the PCB 451 and the battery 489, may be disposed in the direction of the side surface (e.g., the X-Y plane direction) of the sound module 500.

In one embodiment, the sound module 500 may be disposed inside the seating portion 453 of the PCB 451. One surface of the PCB 451 and one surface of the sound module 500 provided in the direction of the front surface (e.g., the +Z direction of FIG. 7) may be supported by the frame 340. In one embodiment, the seating portion 453 may have a structure surrounding an outer surface of the sound module 500 in the direction of the side surface (e.g., the X-Y plane direction).

In one embodiment, the shield can 560 may be coupled to the direction of the rear surface (e.g., the -Z direction) of the PCB 451, and the resonant space R may be provided inside the shield can 560 and the PCB 451. In the resonant space R, a partial area of the sound module 500, specifically, the rear surface of the sound module 500 may be disposed. In the direction of the front surface of the sound module 500, a sound may be mainly emitted in the direction of the acoustic duct 455, and in the surface of the rear surface, at least a portion of a sound may be emitted in the direction of the resonant space R. In one emitted, the sound generated to the front surface of the sound module 500 may be guided through the acoustic duct 455, may pass the sound hole 362, and may be emitted to the outside of the electronic device 301.

In one embodiment, the first compression member 550 (e.g., the compression member 550 of FIGS. 5 and 6B) formed of a compressive material may be disposed between the shield can 560 and the sound module 500 and the first compression member 550 may be compressed or expand by the vibration of the sound module 500, thereby may stably support the sound module 500 and the shield can 560 and may have a shock absorbing effect.

In one embodiment, the frame 340 may include a first support area 458 supporting the front surface of the sound module 500, for example, a parallel surface of the X-Y plane in the +Z direction of FIG. 7, and a second support area 452 supporting one surface of the PCB 451, for example, a parallel surface of the X-Y plane in the +Z direction of FIG. 7.

In one embodiment, the sound module 500 may form a structure, which is substantially disposed in the PCB 451, and a structure in which the resonant space R is formed in the direction of the rear surface of the sound module 500, and the electronic device 301 in one embodiment may improve the sound output performance of the sound module 500 and may improve the spatial efficiency for arrangement of the sound module 500.

In one embodiment, a component 456 implemented in the PCB 451 may be disposed in the resonant space R. In one embodiment, the component 456 disposed in the resonant space R may be a component with low heat emission or a component with high adhesion to the PCB 451.

In one embodiment, the first sealing member 530 (e.g., the sealing member 530 of FIGS. 5 and 6B) may be in contact with the first support area 458 and the front surface of the sound module 500 and may prevent a sound from escaping between the frame 340 and the sound module 500. In one embodiment, the second sealing member 531 may be in contact with the second support area 452 and the PCB 451 and may prevent a sound from escaping between the frame 340 and the PCB 451.

In one embodiment, the first sealing member 530 and the second sealing member 531 may be provided on the frame 340 and a joint surface of the sound module 500 and the PCB 451, thereby may prevent a sound from escaping to the outside through the joint surface, and the resonant space R may be a space that is substantially sealed from the outside and the substantially sealed resonant space R may increase a resonance effect.

FIG. 8 is a cross-sectional view of the electronic device 301 according to one embodiment.

Referring to FIG. 8, the electronic device 301 may include the first shield can 560 and a second shield can 562, and may include a first resonant space R1 and a second resonant space R2 communicating through the opening 457.

To describe FIG. 8, a repeated description related to the descriptions provided above is omitted and modified or added structures are mainly described, and the electronic device 301 in one embodiment including the electronic device 301 of FIG. 8 may be implemented as the electronic device 301 independently or with other embodiments in a scope that those skilled in the art may easily understand.

In one embodiment, the PCB 451 may include the opening 457 opening from the front surface (e.g., the surface in the +Z direction) to the rear surface (e.g., the surface in the -Z direction). The opening 457 may be formed of one or a plurality of openings 457.

In one embodiment, the first shield can 560 (or the shield can 560 of FIG. 7) may form the first resonant space R1 by sealing an area including the seating portion 453 and the opening 457 in the rear surface of the PCB 451. In one embodiment, the second shield can 562 may form the second resonant space R2 by sealing an area including the opening 457 in the front surface of the PCB 451.

In one embodiment, the first resonant space R1 and the second resonant space R2 may communicate with each other through the opening 457 and the first resonant space R1 and the second resonant space R2 may be substantially sealed by the first sealing member 530 and the second sealing member 531. The first resonant space R1 and the second resonant space R2 may be a space in which a sound generated in the rear surface of the sound module 500 resonates. In one embodiment, the opening 457 and the second shield can 562 may be designed to efficiently secure the resonant space R by expanding the resonant space R to the front surface of the PCB 451, and may increase a resonance effect of the resonant space R.

In one embodiment, at least a partial component 456a of a component implemented in the front surface of the PCB 451 may be disposed in the first resonant space R1, and at least a partial component 456b of a component implemented in the rear surface of the PCB 451 may be disposed in the second resonant space R2, and the other component 456c implemented in the front or rear surface of the PCB 451 may be disposed on the outside of the first and second resonant spaces R1 and R2. In the electronic device 301 in one embodiment, at least a component 456c of the components 456a, 456b, and 456c implemented in the PCB 451 may be disposed on the outside of the resonant spaces R1 and R2, and the electronic device 301 may design positions of the components 456a, 456b, and 456c implemented in the PCB 451 by considering various factors, such as wiring structures, soldering intensities, heat generation, and vibration resistance of respective components 456a, 456b, and 456c.

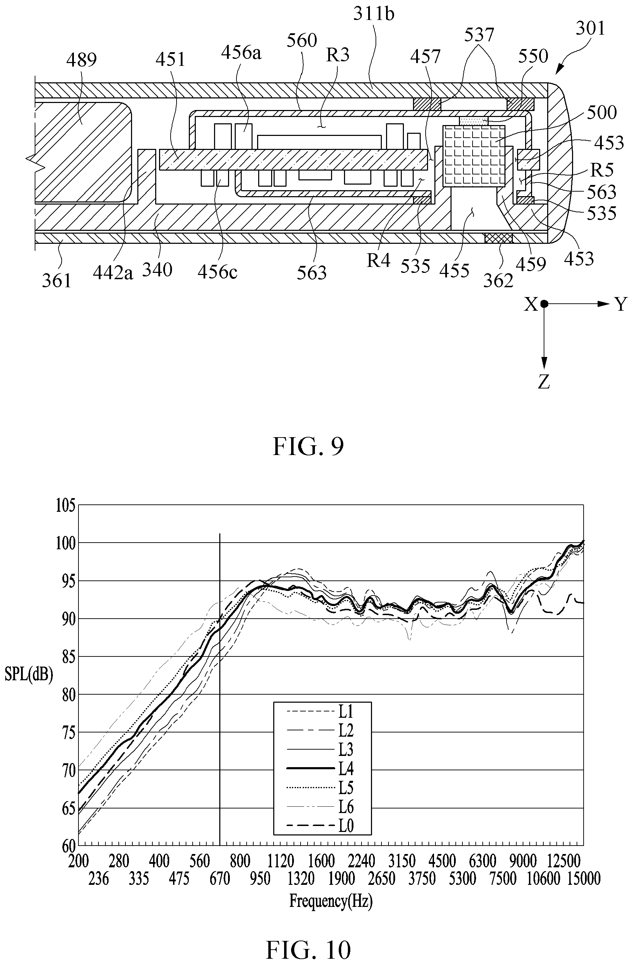

FIG. 9 is a cross-sectional view of the electronic device 301 according to one embodiment.

Referring to FIG. 9, the electronic device 301 may include the first shield can 560 and a third shield can 563, and may include third to fifth resonant spaces R3, R4, and R5 communicating through the opening 457.

To describe FIG. 9, a repeated description related to the descriptions provided above is omitted and modified or added structures are mainly described, and the electronic device 301 in one embodiment including the electronic device 301 of FIG. 9 may be implemented as the electronic device 301 independently or with other embodiments in a scope that those skilled in the art may easily understand.

In one embodiment, the PCB 451 may include the opening 457 opening from the front surface (e.g., the surface in the +Z direction) to the rear surface (e.g., the surface in the -Z direction). In one embodiment, the opening 457 may be the seating portion 453 of the PCB 451 accommodating the sound module 500 and in this case, the plurality of resonant spaces R may communicate through the seating portion 453, which is the opening 457. Alternatively, the PCB 451 in one embodiment may include the seating portion 453 and the opening 457.

In one embodiment, the frame 340 may include a third support area 459 that extends in the direction of the sound module 500 (e.g., the -Z direction) to support the front surface (e.g., the surface in the +Z direction) of the sound module 500 and is substantially in close contact with and supports the sound module 500. The third support area 459 may be substantially in close contact with and support at least a partial area of the front surface and side surface of the sound module 500 such that a sound is emitted through the acoustic duct 455 formed in the direction of the front surface of the sound module 500. Although not shown in the drawings, a sealing member (not shown) may be disposed between the sound module 500 and the third support area 459. Alternatively, the frame 340 in one embodiment may include a support area (e.g., the first support area 458 of FIG. 7) in a different shape and may support the sound module 500 by a sealing member (e.g., the first sealing member 530 of FIG. 7).

In one embodiment, the first shield can 560 (e.g., the shield can 560 of FIG. 7) may form the third resonant space R3 by sealing an area including the seating portion 453 or the opening 457 in the rear surface of the PCB 451. In one embodiment, the third shield can 563 may form the fourth resonant space R4 and the fifth resonant space R5 by opening an area corresponding to the third support area 459 of the frame 340 and sealing an area including the seating portion 453 or the opening 457 in the front surface of the PCB 451.

In one embodiment, the fifth resonant space R5 may be a space formed by extension of the third shield can 563 in one direction (e.g., the +Y direction) of the PCB 451. Specifically, the third shield can 563 may be open to surround the front surface of the sound module 500 in the direction of the side surface (e.g., the X-Y plane direction) of the third support area 459 supporting the front surface of the sound module 500 and the sound module 500 may be disposed in the open internal space. Compared to the second shield can 562 of FIG. 8, an area where the second shield can 562 is coupled to the PCB 451 may be a structure spaced apart from the first support area 458, whereas an area where the third shield can 563 is coupled to the PCB 451 may be a structure surrounding the third support area 459. The third shield can 563 in one embodiment may be coupled to the PCB 451 to embrace the third support area 459 and may additionally secure the fifth resonant space R5.

In one embodiment, a third sealing member 535 may be in contact with the partial area 453 of the frame 340 adjacent to the third shield can 563 and the third support area 459 and may prevent a sound from escaping between the third shield can 563 and the frame 340. The third sealing member 535 may prevent a sound from escaping to the outside through a joint surface of the third shield can 563 and the frame 340 and may substantially seal the third resonant space R3, the fourth resonant space R4, and the fifth resonant space R5 from the outside. The substantially sealed resonant space R may increase the resonance effect. In one embodiment, the third sealing member 535 may support the third shield can 563.

In one embodiment, the fourth sealing member 537 may be disposed to be in contact with the rear surface of the first shield can 560 and the second plate 311b (or the rear plate) disposed on the rear surface of the first shield can 560. The fourth sealing member 537 may prevent a sound from escaping to the outside through a space between the third shield can 563 and the second plate 311b (or the rear plate).

FIG. 10 is a profile illustrating a sound intensity with respect to a frequency of a sound of the electronic device 301 according to one embodiment.

Specifically, FIG. 10 may be a graph showing a sound intensity with respect to the frequency of the sound emitted by the electronic device 301 by changing the volume of the resonant space R secured through the shield can 560 in various embodiments described above.

L0 may be a line showing an output of an ideal sound of a front speaker of a small electronic device 301, for example, a portable wireless communication device.

L1 to L6 may be lines showing outputs of sounds according to the volume of a resonant space (e.g., the resonant space R of FIG. 7) in the small electronic device 301, and specifically, L1 may be a line with respect to the electronic device 301 having the resonant space R of 0.5 cc, L2 may be a line with respect to the electronic device 301 having the resonant space R of 0.75cc, L3 may be a line with respect to the electronic device 301 having the resonant space R of 1.0 cc, L4 may be a line with respect to the electronic device 301 having the resonant space R of 1.5 cc, L5 may be a line with respect to the electronic device 301 having the resonant space R of 2.0 cc, and L6 may be a line with respect to the electronic device 301 having the resonant space R of 5.0 cc.

Referring to L1 to L3, in a low-frequency area, for example, less than or equal to 670 Hz, a sound intensity may be less than or equal to 85 dB, and in an area less than or equal to 1 kHz, a sound intensity may be relatively low. In addition, greater than or equal to 1 kHz, a sound intensity that is greater than L4 to L6 may be output, and in a high-frequency area greater than or equal to 3 kHz, the sound intensity may be less than or similar to L4 to L6.

In other words, when the volume of the resonant space R is less than or equal to 1.0 cc, a sound intensity may be low in the low-frequency area and in a partial area, as a sound intensity rapidly increases, the sound intensity may be relatively unstable and the sound quality may be degraded.

Referring to L4 and L5, a sound output similar to the ideal L0 line may be shown from the low-frequency area to the high-frequency area, and compared to L1 to L3, the acoustic flatness may be improved, thereby it may be expected that the sound may be relatively stably output and degradation of the sound quality may be prevented.

Referring to L6, compared to the other lines, since a sound intensity is great in the low-frequency area and a sound intensity is small in the high-frequency area, the acoustic flatness may be improved and even sound quality may be output in the entire area.

Referring to the profile of FIG. 10, the electronic device 301 having a constraint to sufficiently secure a space of the sound module 500, such as a portable wireless communication device or a display 361 output device, may improve the sound output performance by securing the resonant space R formed on the rear surface of the sound module 500 and specifically, may prevent general sound quality degradation by improving the performance in the low-frequency area.

The electronic device 301 in one embodiment of the present disclosure may form the resonant space R of the sound module 500 using the shield can 560 and the PCB 451, may efficiently improve the sound output performance, and may secure an internal space of the electronic device 301.

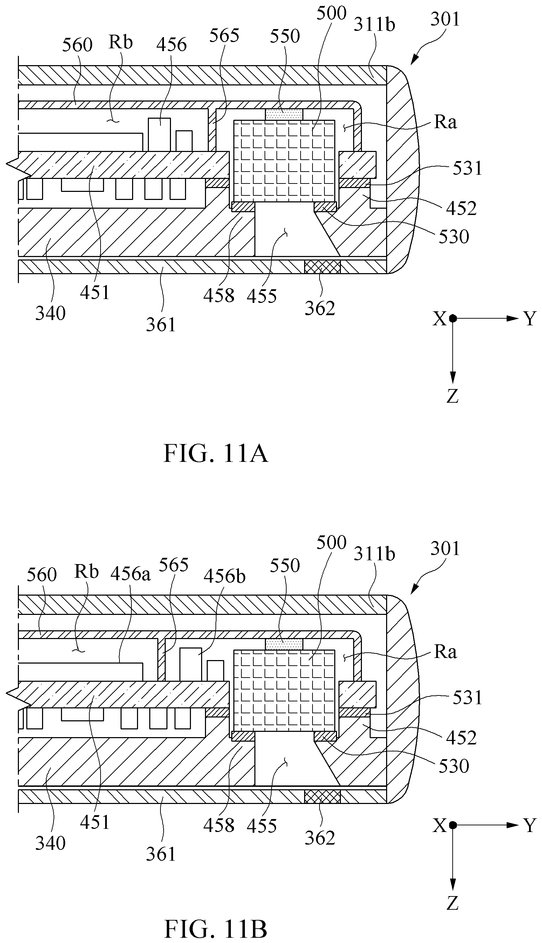

FIG. 11A is a cross-sectional view of the electronic device 301 according to one embodiment, and FIG. 11B is a cross-sectional view of the electronic device 301 according to one embodiment.

Referring to FIGS. 11A and 11B, the shield can 560 may include a partition wall 565.

To describe FIGS. 11A and 11B, a repeated description related to the descriptions provided above is omitted and modified or added structures are mainly described, and the electronic device 301 in one embodiment including the electronic device 301 of FIGS. 11A and 11B may be implemented as the electronic device 301 independently or with other embodiments in a scope that those skilled in the art may easily understand.

In one embodiment, the shield can 560 may include the partition wall 565 partitioning the resonant space R. Based on the partition wall 565, the resonant space R may be partitioned into a first area Ra where the seating portion 453 is placed and a second area Rb that is a different area partitioned from the first area Ra.

In one embodiment, at least a partial area of the partition wall 565 may be formed of a metallic material and may be implemented in the PCB 451, thereby the hardness may be secured. Alternatively, at least a partial area of the partition wall 565 may have a partition screen structure that is spaced apart from the PCB 451.

In one embodiment, the partition wall 565 may partition a plurality of components 456 implemented in the PCB 451 to be spatially separated from each other. Alternatively, the partition wall 565 may partition the sound module 500 and some of the plurality of components 456 implemented in the PCB 451 to be separated from each other.

For example, as shown in FIG. 11A, in the PCB 451 in one embodiment, the plurality of components 456 may be implemented only in the second area Rb. Alternatively, as shown in FIG. 11B, the PCB 451 in one embodiment may include a first component 456b disposed in the first area Ra and a second component 456a disposed in the second area Rb.

In one embodiment, in the PCB 451, more components 456 may be implemented in the second area Rb than the first area Ra in the resonant space R. For example, the PCB 451 may include a plurality of first components 456b and a plurality of second components 456a, and the plurality of second components 456b may be relatively less than the plurality of first components 456a.

In one embodiment, the partition wall 565 may shield electrical noise, magnetic noise, or external noise between the first area Ra and the second area Rb by partitioning the sound module 500 and the plurality of components 456 of the PCB 451. In one embodiment, the electronic device 301 may strengthen noise shielding through the placement of the partition wall 565 and the placement design of the plurality of components 456 of the PCB 451.

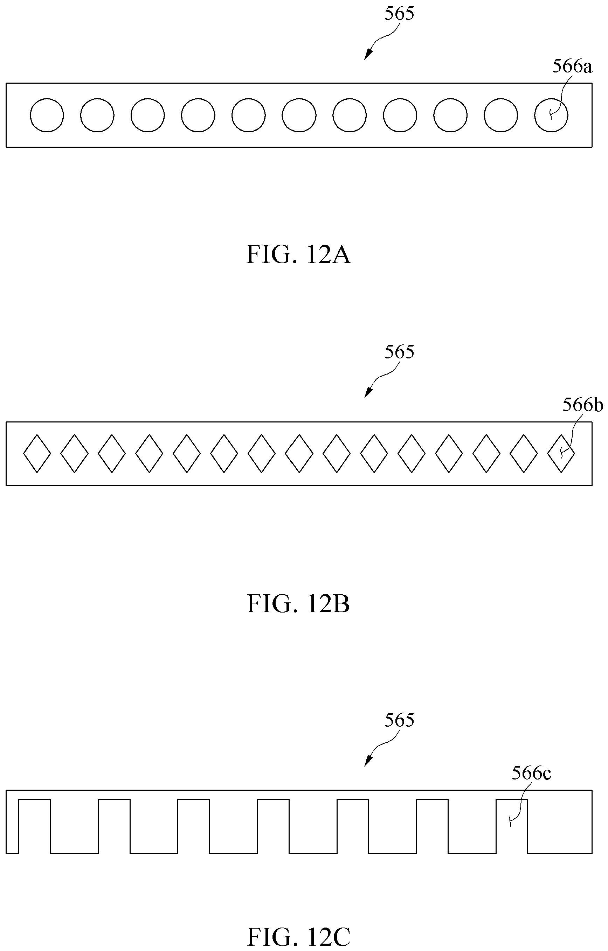

FIGS. 12A to 12C are views illustrating the partition wall 565 of the electronic device 301 in one embodiment.

Referring to FIGS. 12A to 12C, the partition wall 565 of the electronic device 301 in one embodiment may include a plurality of windows 566a, 566b, and 566c.

To describe FIGS. 12A to 12C, a repeated description related to the descriptions provided above is omitted and modified or added structures are mainly described, and the electronic device 301 in one embodiment including the electronic device 301 of FIGS. 12A and 12B may be implemented as the electronic device 301 independently or with other embodiments in a scope that those skilled in the art may easily understand.

In one embodiment, the partition wall 565 may partition the resonance space R into a first area (e.g., the first area Ra of FIG. 11A) and a second area (e.g., the second area Rb of FIG. 11A), and may block noise by shielding the second area Rb from the first area Ra where the sound module 500 is placed. Referring to the profile of FIG. 10, the resonant space R in one embodiment may be reduced by the partition wall 565, thereby the sound quality may be degraded.

In one embodiment, the plurality of windows 566a, 566b, and 566c may be open areas to allow a sound to pass from the first area Ra to the second area Rb. In one embodiment, the partition wall 565 may expand the resonant space R to the second area Rb while including the plurality of windows 566a, 566b, and 566c, and may prevent a sound quality degradation problem.

In one embodiment, the shape and arrangement of the plurality of windows 566a, 566b, and 566c of the partition wall 565 are not limited, and the plurality of windows may be arranged in a row in the partition wall 565. For example, as shown in the drawings, the plurality of windows 566a may have a circular shape and the plurality of windows 566b may have a polygonal shape. Alternatively, the plurality of windows 566c may have a door shape that is open in the top or bottom direction.

In the structure of the plurality of windows 566a, 566b, and 566c in one embodiment, the shape and arrangement thereof may be variously designed and may configure a sound path, and a resonance effect may be improved by designing a diffusion path of a sound in the resonant space R.

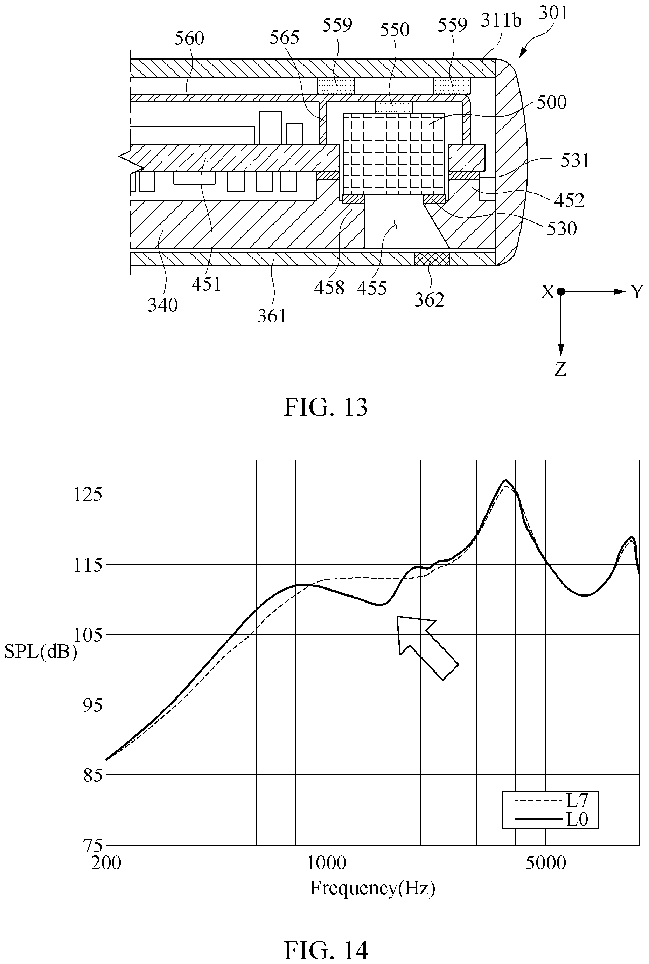

FIG. 13 is a cross-sectional view of the electronic device 301 according to one embodiment.

To describe FIG. 13, a repeated description related to the descriptions provided above is omitted and modified or added structures are mainly described, and the electronic device 301 in one embodiment including the electronic device 301 of FIG. 13 may be implemented as the electronic device 301 independently or with other embodiments in a scope that those skilled in the art may easily understand.

In one embodiment, the first compression member 550 may be disposed to contact the rear surface of the sound module 500 and the first shield can 560, and the second compression member 557 may be disposed to contact the rear surface of the first shield can 560 and the second plate 311b (or the rear plate) disposed on the rear surface of the shield can 560. The first compression member 550 and the second compression member 557 may be formed of a compressive material and may prevent the shield can 560 from escaping due to various factors, such as vibration of the sound module 500 or an external impact of the electronic device 301.

In one embodiment, the second compression member 557 may be disposed at the same or similar position to the sealing member 530 (e.g., the fourth sealing member 537 of FIG. 9), the compression member 550 in one embodiment described above may be replaced by the sealing member 530, the sealing member 530 in one embodiment described above may be replaced by the compression member 550. However, the example is not limited thereto and one member may function as the sealing member 530 and the compression member 550.

FIG. 14 is a profile illustrating a sound intensity with respect to a frequency of a sound of the electronic device 301 according to one embodiment.

L0 may be a line showing an intensity of an output sound depending on a frequency in a case in which a sound is leaked because the resonant space R is not substantially sealed and is open due to a reason, such as that the sealing member 530 in one embodiment is not included or a partial area of the shield can 560 escapes from the PCB 451.

L7 may be a line showing an intensity of an output sound depending on a frequency in the electronic device 301 in one embodiment of the present disclosure that is substantially sealed.

When comparing L7 with L0, L0 may form a peak area in which a sound intensity increases and then decreases in an area adjacent to 1 kHz and a dip area in which a sound intensity decreases and then increases.

The electronic device 301 in one embodiment of the present disclosure may form the resonant space R that is substantially sealed through the shield can 560, the sealing member 530, or the compression member 550 in the embodiment described above, and as shown in L7, improvement of the sound quality may be expected as the acoustic flatness is improved.

The electronic device 301 in one embodiment may include the PCB 451 in which the seating portion 453, which is open from the front surface to the rear surface that is opposite to the front surface, is formed, the sound module 500 disposed on the seating portion 453 and generating a sound, and the first shield can 560 sealing an area including the seating portion 453 in the rear surface of the PCB 451, wherein the first shield can 560 and the PCB 451 may form the resonant space R in which a sound generated to the rear surface of the sound module 500 causes resonance.

In one embodiment, the PCB 451 may include the opening 457 that is open from the front surface to the rear surface, the shield can 560 may seal an area including the seating portion 453 and the opening 457 in the rear surface of the PCB 451, and the electronic device 301 may include the second shield can 563 sealing an area including the opening 457 in the front surface of the PCB 451.

In one embodiment, the frame 340 may include the first support area 458 supporting the front surface of the sound module 500, the frame 340 in which the acoustic duct 455 receiving a sound from the front surface of the sound module 500 and guiding the sound is formed, and the first sealing member 530 that is in contact with the first support area 458 and the front surface of the sound module 500 and prevents a sound from escaping between the frame 340 and the sound module 500.

In one embodiment, the frame 340 may include the second support area 452 extending in the direction of the PCB 451 to support the PCB 451, and the electronic device 301 may include the second sealing member 531 that is in contact with the second support area 452 and the PCB 451 and prevents a sound from escaping between the frame 340 and the PCB 451.

In one embodiment, the frame 340 may include the third support area 459 extending in the direction of the sound module 500 to support the front surface of the sound module 500, the first shield can 560 may seal an area including the seating portion 453 in the rear surface of the PCB 451, and the electronic device 301 may include the third shield can 563 of which an area corresponding to the third support area 459 of the frame 340 is open and which seals an area including the seating portion 453 in the front surface of the PCB 451.

In one embodiment, the electronic device 301 may include the third sealing member 535 that is in contact with the third shield can 563 and the partial area 453 of the frame 340 adjacent to the third support area 459 and prevents a sound from escaping between the third shield can 563 and the frame 340.

In one embodiment, the electronic device 301 may include the first compression member 550 disposed to be in contact with the rear surface of the sound module 500 and the first shield can 560 and formed of a compressive material.

In one embodiment, the electronic device 301 may include the rear plate 311b disposed on the rear surface of the first shield can 560 and the second compression member 557 disposed to be in contact with the rear surface of the first shield can 560 and the rear plate 311b and formed of a compressive material.

In one embodiment, the first shield can 560 may include the partition wall 565 partitioning the resonant space R, and the resonant space R may include the first area Ra in which the sound module 500 is placed and the second area Rb partitioned from the first area Ra.

In one embodiment, the PCB 451 may include the first component 456b disposed in the first area Ra and the second component 456a disposed in the second area Rb in the resonant space R.

In one embodiment, the PCB 451 may include a plurality of first components 456b and a plurality of second components 456a, and the plurality of second components 456b may be less than the plurality of first components 456a.

In one embodiment, in the PCB 451, the plurality of components 456 may be implemented only in the second area Rb in the resonant space R. In one embodiment, the partition wall 565 may include the plurality of windows 566a, 566b, and 566c that are open to pass a sound from the first area Ra to the second area Rb.

In one embodiment, the plurality of windows 566a, 566b, and 566c may be formed in a row in the partition wall 565.

The electronic device 301 in one embodiment may include the housing 310 including the front plate 311a, the rear plate 311b, and the frame 340 which is disposed between the front plate 311a and the rear plate 311b and in which the acoustic duct 455 that receives and guides a sound is formed, the sound module 500 disposed in the housing 310, supported by the frame 340, and configured to output a sound to the acoustic duct 455, the PCB 451 which is coupled to the frame 340 and in which the seating portion 453 that is open to enclose the side surface of the sound module 500 is formed, and the first shield can 560 coupled to the PCB 451 to seal an area including the seating portion 453 in the rear surface of the PCB 451, wherein the first shield can 560 and the PCB 451 may form the resonant space R in which a sound generated to the rear surface of the sound module 500 causes resonance.

In one embodiment, the PCB 451 may include the opening 457 that is open from the front surface to the rear surface, the first shield can 560 may shield an area including the seating portion 453 and the opening 457 in the rear surface of the PCB 451, and the electronic device 301 may include the second shield can 563 that seals an area including the opening 457 in the front surface of the PCB 451.

In one embodiment, the electronic device 301 may include the first support area 458 supporting the front surface of the sound module 500 and the first sealing member 530 that prevents a sound from escaping between the frame 340 and the sound module 500 and is in contact with the front surface of the sound module 500, the first support area 458, and the frame 340 in which acoustic duct 455 that receives and guides a sound from the front surface of the sound module 500 is formed.

In one embodiment, the frame 340 may include the second support area 452 extending in the direction of the PCB 451 to support the PCB 451 and the electronic device 301 may include the second sealing member 531 that is in contact with the second support area 452 and the PCB 451 and prevents a sound from escaping between the frame 340 and the PCB 451.

In one embodiment, the frame 340 may include the third support area 459 extending in the direction of the sound module 500 to support the front surface of the sound module 500 and the first shield can 560 may include an area including the seating portion 453 in the rear surface of the PCB 451, and the electronic device 301 may include the third shield can 563 of which an area corresponding to the third support area 459 of the frame 340 is open and shields an area including the seating portion 453 in the front surface of the PCB 451.

In one embodiment, the electronic device 301 may include the third sealing member 535 that is in contact with the third shield can 563 and the partial area 453 of the frame 340 adjacent to the third support area 459 and prevents a sound from escaping between the third shield can 563 and the frame 340.

In one embodiment, the electronic device 301 may include the first compression member 550 disposed to be in contact with the rear surface of the sound module 500 and the first shield can 560 and formed of a compressive material and the second compression member 557 disposed to be in contact with the rear surface of the first shield can 560 and the rear plate 311b and formed of a compressive material.

Although the preferred embodiments are illustrated and described above, the present disclosure is not limited to specific embodiments described above. It is obvious that various modifications may be implemented by those of ordinary skill in the art of the present disclosure without departing from the scope of the claims, and such modifications shall not be separately understood from the technical idea or aspect.

## Claims

1. An electronic device comprising:
a printed circuit board (PCB) in which a seating portion that is open from a front surface to a rear surface, which is opposite to the front surface, is formed;
a sound module disposed on the seating portion and configured to generate a sound; and
a first shield can shielding an area comprising the seating portion in a rear surface of the PCB,
wherein the first shield can and the PCB form a resonant space in which a sound generated to a rear surface of the sound module causes resonance.

2. The electronic device of claim 1, wherein the PCB comprises an opening that is open from the front surface to the rear surface,
the first shield can shields an area comprising the seating portion and the opening in the rear surface of the PCB, and
the electronic device further comprises a second shield can shielding an area comprising the opening in the front surface of the PCB.

3. The electronic device of claim 1, further comprising:
a frame comprising a first support area supporting a front surface of the sound module and configured to receive and guide a sound from the front surface of the sound module; and
a first sealing member that is in contact with the first support area and the front surface of the sound module and prevents a sound from escaping between the frame and the sound module.

4. The electronic device of claim 3, wherein the frame comprises a second support area extending in a direction of the PCB to support the PCB, and
the electronic device comprises a second sealing member that is in contact with the second support area and the PCB and prevents a sound from escaping between the frame and the PCB.

5. The electronic device of claim 3, wherein the frame comprises a third support area extending in a direction of the sound module to support the front surface of the sound module.

6. The electronic device of claim 4, wherein the first shield can shields an area comprising the seating portion in the rear surface of the PCB, and
the electronic device comprises a third shield can of which an area corresponding to the third support area of the frame is open and which shields an area comprising the seating portion in the front surface of the PCB.

7. The electronic device of claim 6, further comprising:
a third sealing member that is in contact with the third shield can and a partial area of the frame adjacent to the third support area and prevents a sound from escaping between the third shield can and the frame.

8. The electronic device of claim 1, further comprising:
a first compression member disposed to be in contact with the rear surface of the sound module and the first shield can and formed of a compressive material.

9. The electronic device of claim 1, further comprising:
a rear plate disposed on a rear surface of the first shield can; and
a second compression member disposed to be in contact with the rear surface of the first shield can and the rear plate and formed of a compressive material.

10. The electronic device of claim 1, wherein the first shield can comprises a partition wall partitioning the resonant space, and
the resonant space comprises a first area in which the sound module is placed and a second area partitioned from the first area.

11. The electronic device of claim 10, wherein the PCB comprises a first component disposed in the first area and a second component disposed in the second area in the resonant space.

12. The electronic device of claim 10, wherein the PCB comprises a plurality of first components and a plurality of second components, and
the plurality of second components is less than the plurality of first components.

13. The electronic device of claim 10, wherein, in the PCB, a plurality of components is implemented only in the second area in the resonant space.

14. The electronic device of claim 10, wherein the partition wall comprises a plurality of windows that is open to pass a sound from the first area to the second area.

15. The electronic device of claim 14, wherein the plurality of windows is formed in a row in the partition wall.
